Europäisches Patentamt

European Patent Office

Office européen des brevets

(19)

(11) Publication number: **0 442 155 A1**

## EUROPEAN PATENT APPLICATION

(12)

(21) Application number: **90200343.3**

(22) Date of filing: **14.02.90**

(51) Int. Cl.⁵: **B60C 11/14**

The title of the invention has been amended (Guidelines for Examination in the EPO, A-III, 7.3).

(43) Date of publication of application:
**21.08.91 Bulletin 91/34**

(84) Designated Contracting States:
**CH DE FR GB IT LI SE**

(71) Applicant: **YACHIYO MICRO SCIENCE COMPANY LIMITED**
**1-28-2, Kanda-Sudacho**
**Chiyoda-ku, Tokyo(JP)**

(72) Inventor: **Emura, Akira c/o Yachiyo Micro Science KK nai**
**1-28-2 Kanda-Sudacho**
**Chiyoda-ku, Tokyo(JP)**
Inventor: **Harada, Shuichi c/o Yachiyo Micro Science KK nai**
**1-28-2 Kanda-Sudacho**
**Chiyoda-ku, Tokyo(JP)**
Inventor: **Emura, Kazuya c/o Yachiyo Micro Science KK nai**
**1-28-2 Kanda-Sudacho**
**Chiyoda-ku, Tokyo(JP)**

(74) Representative: **Noz, Franciscus Xaverius, Ir. et al**
**Algemeen Octrooibureau P.O. Box 645**
**NL-5600 AP Eindhoven(NL)**

(54) **Elastomeric composite having anti-slip performance.**

(57) An elastomeric composite having anti-slip ability is prepared by dispersing coated hard particles (e.g. silicon carbide) in rubbery material. The coating agent (e.g. epoxy resin) has a lower hardness than the particles themselves and the surface to be contacted. The elastomeric composite can be used for products requiring anti-slip characteristics such as automobile-tyres, shoe-soles, flooring material, etc.

FIG.1

## FIELD OF THE INVENTION

This invention relates to rubber state elastic body composite excellent in slip prevention function and more paticularly a rubber state elastic body composite excellent in slip prevention function which can be used for an automobile tire, sole of a shoe, floor materials, etc.

## BACKGROUND OF THE INVENTION

Rubber is mostly used for products required to have antislipping function such as an automobile tire or a shoe sole.

Rubber is soft material with high elasticity among the material for our daily life, and its antislipping function is obtained from the phenomenon that, when it is contacted with other material to be contacted under certain force, the rubber surface will bite in miniature dents existing on the surface of the material to be contacted. In other words, viewing minutely, rubber and material being contacted are meshing each other. On the other hand, in the case of an ice face, the surface also has minute uneaveness in natural condition, however, when pressure acted on the surface, the convex part will instantaneously melt and the ice surface will be smmothed infinitely up to molecular level. Therefore, the above biting phenomenon will not yield, and it is natural that the antislipping function entirely will not generate when a tire is contacted on a frozen road with pressure.

Therefore, the surface of a car tire is usually forcibly being secured friction with frosen surface due to planting hard spikes or winding a chain on the surface.

However, when a tire planted with spikes run on a road without freezing, the spikes will scrape off the road surface, and generate dusts, and this is becoming a large environmental dispute, and some countries are prohibiting the use of spike tires, and presently a tire with excellent antislipping performance is being looked for to replace the spike tire.

## SUMMARY OF THE INVENTION

The object of this invention is to provide a rubber state elastic body products which can be used as an automobile tire having sufficient frictional force without hurting surface to be contacted such as road.

And the other object is to offer a rubber state elastic body products which can be used not only as an automobile tire but also widely for other products requiring antislipping performance such as a shoe sole, floor material, etc.

## BRIEF DESCRIPTION OF THE DRAWING

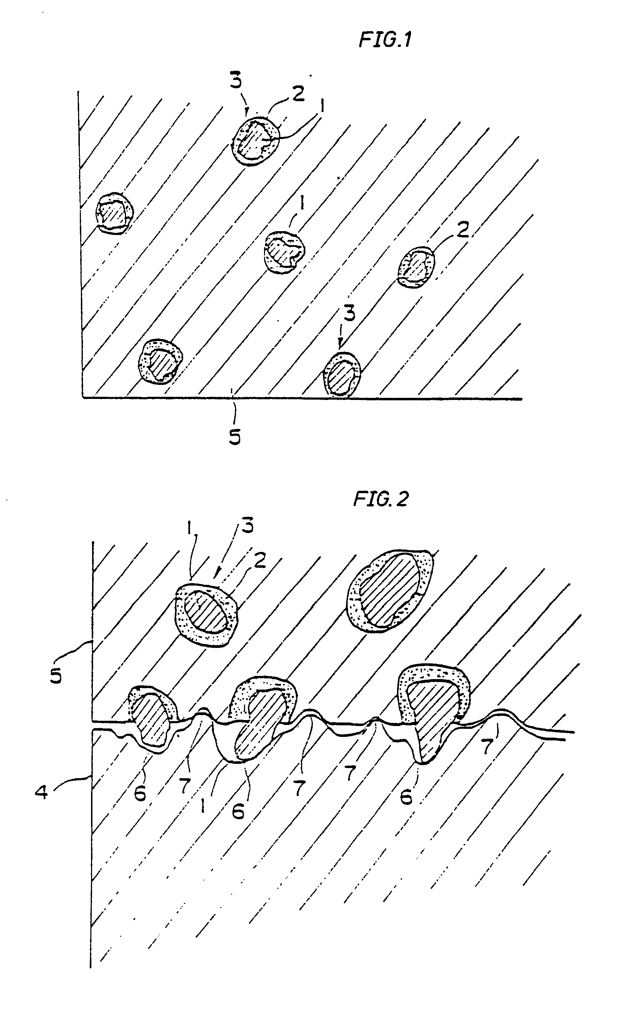

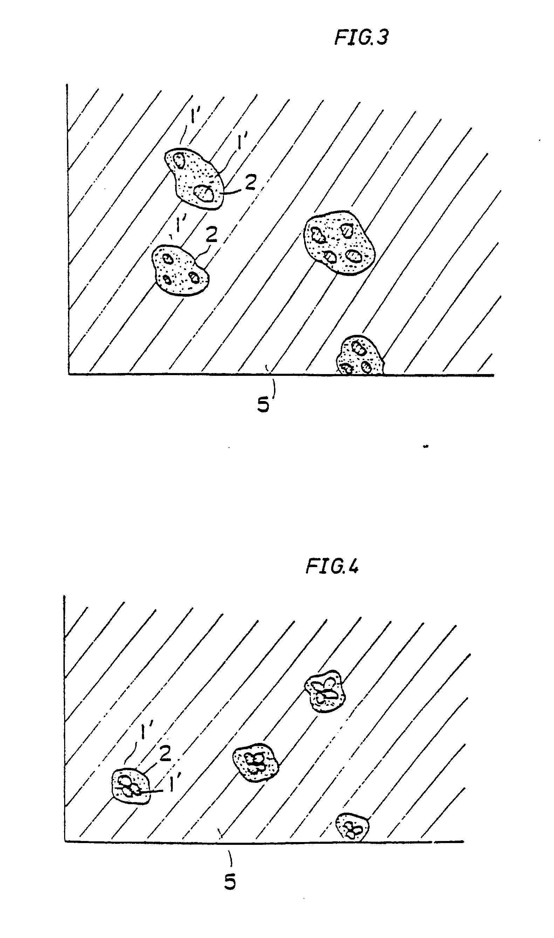

Fig.1 is an enlarged sectional view of a rubber state elastic body products, which is excellent in antislipping performance, as an exemplary embodiment of this invention. Fig.2 is an enlarged sectional view indicating the contacting condition to the surface of material to be contacted. Fig.3 and Fig.4 are enlarged sectional view of other exemplary embodiment.

## DETAILED DESCRIPTION OF THE PREFERRED EMBODIMENT

In the Fig.1, numeral 1 is a small piece of a very hard material, of which surface is covered with covering material 2, to become covered material 3. The very hard material small piece 1 must has higher hardness than the surface of material to be contacted 4, and small piece of silicone carbide (SiC), alumunium oxide, garnet ore, carbite alloy, etc., can be used as this material. There is no specific requirement for form of the small piece, however, a configuration having protrusion, to bite into the material to be contacted 4, is preferable. Moreover, the size of 30 micron to 100 micron is preferable.

The covering material 2 is to make the bonding of a very hard material small piece 1 and rubber state elastic material 5 to be explained later to stronger, and also serves as shock absorbing material, which shall be selected properly in accordance with the type of a very hard material small piece 1, and phenolic resin, epoxy resin, bridge-polyethylene, polyamide resin, etc., can be used as adequate material. The desirable thickness of the covering material 2 is between 5 micron to 20 micron. This covering material 2 shall have a hardness higher than rubber state elastic material 5, and lower than the hardness of very hard material small piece 1 and material to be contacted 4.

The hardness of very hard material small piece 1, covering material 2, material to be contacted 4, and rubber status elastic material 5 are as follows:
Very hard material small piece 1 > Material to be contacted 4 > Covering material 2 > Rubber status elastic material 5.

Moreover, the surface of the very hard material small piece 1 may be treated with coupling process and upon which may be covered with covering material 2, or the covering may be with a multi-layer structure using plural number types of covering materials 2.

Moreover, this covered material 3, composed of covering the surface of the very hard material small piece 1 with covering material 2 is kneaded into the rubber state elastic material 5, and is evenly dispersed three dimensionally in the rubber state elastic material 5. The ratio of this covering material 3 and the rubber status elastic material 5 is preferably made to the extent of between 1:9 to 3:7 in volume.

It is natural that the elastic state material 5 means general elastic body of rubber state material, and is not restricted to natural rubber and synthetic rubber, but soft synthetic resin elastic bodies are also included.

Fig.3 and Fig.4 are sectional view of an elastic body products, excellent in antislipping performance which is other exemplary embodiment related to this invention. In this exemplary embodiment, plural number of very hard material small pieces 1' are covered by a covering material 2. The covering material 2 is not necessarily cover each one piece of the small piece, but may collectively cover the plural number of small pieces with one covering as shown in the drawing.

As stated above, a very hard material small piece 1 is covered with covering material of the hardness lower than the very hard material and the material to be contacted 4, and three dimensionally dispersed in the rubber state material 5, and when this rubber state elastic compound is formed to a tire, it is contacted to the material to be contacted 4, and because the covering material 2 of the covered material 3 exposed to the surface has lower hardness than the surface of material to be contacted 4, it is broken due to the contact with the material to be contacted 4, and the very hard material small piece 1 will be exposed. And the very hard material small piece 1 exposed to the surface of the rubber state elastic body products which is composing a tire, etc., bite into the concave surface 6 of the material to be contacted 4, ice surface, snow surface or asphalt and performs gripping function. Namely very hard material small piece 1 functions same as spikes. Moreover, in case the surface of the material to be contacted 4 has uneveness such as asphalt face, the small piece 1 will bite into the concave position 6 of the material to be contacted 4, and at the same time the convex portion 7 of the material to be contacted bits into the surface of the rubber state elastic body, making double gripping relation and the engagement of both materials become more strong. Further, the very hard material small piece 1 is contacting with rubber state elastic body 5 through covering material 2, the covering material 2 performs shock absorbing function, and it is prevented that very hard material small piece 1 will bite in the rubber state elastic body 5 due to the contacting pressure with the material to be contacted 4.

The covered material 3, which is very hard material small piece 1 covered with covering material 2 is small, and successively falls off with the wear of the surface of rubber status elastic body 5, however, much of this covered material 3 are three dimensionally distributed in the rubber state elastic body 5, the new covered material 3 appeares to the surface as the rubber status elastic body 5 is worn off. Therefore, antisliding function is continued to be maintained. On the other hand, different from the case of spikes and chain, the very hard material small piece 1 is very small, and almost no surface of the material to be contacted 4 is cut off.

The rubber state elastic body composite of this invention which is excellent in antislipping function is constructed as stated above, and is formed and used for use to car tire, shoe sole, floor material, etc., and when the contact surface with the material to be contacted is worn, new covered material always appeares, and can perform antislipping function with newly appearing covered materials.

Therefore when used for a car tire, it exhibits a very excellent antislipping performance not only on a dry road surface but also on an ice or a snow surface, to maintain better gripping force than spikes and/or chains, and can run on a frozen road without generating dust pollution.

## Claims

A rubber state elastic material composite, excellent in antislipping function and speciallized in that covered material which is made due to covering the surface of (a) very hard material small chip (chips) with covering material having lower hardness than this very hard material and material to be contacted, and this covered material is kneaded with rubber state material and dispersed evenly.

*FIG.1*

*FIG.2*

## FIG.3

## FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CH-A-166228 (F.GEYER)<br>* page 1, paragraph 1 - page 2, paragraph 1 * | 1 | B60C11/14 |
| X | US-A-3850875 (B.H. ROBSON)<br>* column 1, paragraph 1 *<br>* column 10, line 6 - column 11, line 75; figures * | 1 | |
| X | FR-A-818678 (E.G. BUDD MANUFACTURING COMPANY)<br>* page 4, line 85 - page 5, line 14; figures * | 1 | |
| A | US-A-2672910 (W.G. CORSON)<br>* the whole document * | 1 | |
| A | DE-A-2326455 (MAURITIUS,GERNOT)<br>* claim 1; figure * | 1 | |
| | | | **TECHNICAL FIELDS SEARCHED (Int. Cl.5 )** |
| | | | B60C |

The present search report has been drawn up for all claims

| Place of search | Date of completion of the search | Examiner |
|---|---|---|
| THE HAGUE | 11 OCTOBER 1990 | REEDIJK A.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)